# FASCICULE DE BREVET EUROPEEN

(11) **EP 3 109 983 B1**
(45) Date de publication et mention de la délivrance du brevet: **21.06.2023**
(21) Numéro de dépôt: 16176254.7
(22) Date de dépôt: 24.06.2016
(51) Int. Cl.: H02K 1/276, H02K 21/16, H02K 5/15, H02K 5/16, H02K 11/215, H02K 11/33, H02K 29/08

(54) **MACHINE ÉLECTRIQUE TOURNANTE SYNCHRONE COMPACTE**
KOMPAKTE DREHENDE ELEKTRISCHE SYNCHRONMASCHINE
COMPACT SYNCHRONOUS ROTARY ELECTRICAL MACHINE

(30) Priorité: 24.06.2015 FR 1555831
(43) Date de publication de la demande: 28.12.2016
(73) Titulaire: BHG, 68220 Attenschwiller (FR)
(72) Inventeur: PASQUIER, Patrick, 74300 CLUSES (FR); VUARCHEX, Alain, 74970 MARIGNIER (FR)
(74) Mandataire: Cabinet Bleger-Rhein-Poupon

(56) Documents cités:
- WO-A1-2011/159674
- WO-A2-03/094324
- FR-A1- 2 918 221
- US-A1- 2004 232 786
- US-A1- 2014 175 957

## Description

La présente invention a trait à une machine électrique tournante synchrone autopilotée, par exemple un moteur sans balais, qui comporte communément un stator et un rotor muni d'aimants permanents périphériques. L'ensemble stator/rotor est logé dans un carter relié à un arbre solidaire du rotor via des paliers disposés de part et d'autre dudit ensemble.

Des machines électriques tournantes synchrones autopilotées similaires sont notamment décrits dans les documents FR2918221 A1, WO2011/159674 A1, US2004/232786 A1 et US2014/175957 A1.

Dans un des usages préférentiels qui seront faits de l'invention, l'entraînement de volets roulants, l'espace dévolu au moteur d'entraînement du volet est particulier, ledit moteur étant placé à l'intérieur de l'enrouleur du volet, lequel est de fait constitué d'un arbre cylindrique creux. Le carter du moteur se présente dès lors sous la forme d'un cylindre allongé dont les dimensions sont compatibles avec celles du volume cylindrique intérieur de l'axe d'enroulement du volet roulant.

Ce type de machines tournantes est autopiloté, c'est-à-dire qu'il comporte un dispositif de commande électronique prévu pour assurer la commutation du courant dans les enroulements statoriques, substituant de fait la commutation mécanique assurée par les balais dans un moteur à courant continu par une commutation électronique. Des capteurs sont communément utilisés pour connaître à tout moment la position du rotor, et adapter en conséquence l'alimentation des bobines statoriques et par suite les caractéristiques du champ magnétique tournant. En substance, lorsqu'un capteur détecte le changement de polarisation magnétique d'un aimant permanent du rotor qui passe à son niveau, le circuit de commande électronique procède à la commutation des bobines du stator. Le rôle de l'ensemble capteur / dispositif de commande électronique est d'assurer l'autopilotage du moteur, ce qui revient en pratique à maintenir l'orthogonalité du flux magnétique statorique par rapport au flux rotorique.

Pour les puissances requises dans l'application à des volets roulants, le dispositif électronique de pilotage peut en général être intégré au moteur, par exemple sous la forme de cartes électroniques coopérant avec l'ensemble stator/rotor. Les moyens de commande électroniques sont en tout état de cause au moins partiellement implantés dans le carter et y cohabitent avec les fonctions mécaniques assurées dans la même zone, notamment la gestion mécanique de l'arbre tournant par rapport au carter du moteur, ainsi que les liaisons à d'éventuels composants mécaniques additionnels du type réducteur, nécessaire dans ce type d'application.

Jusqu'ici, la liaison mécanique entre le carter externe et l'arbre tournant située du côté du ou des dispositifs de commande électroniques était effectuée via un support de palier situé au-delà des moyens électroniques au moins de détection de la position du rotor, qui sont par essence positionnés très près de celui-ci. L'idée est que ledit support, par exemple un flasque terminal fermant le carter, doit être positionné de manière à ne pas interférer avec la fonction électromagnétique impliquant les aimants permanents du rotor et les capteurs de position coopérant avec ces derniers. Les problématiques liées à la gestion des fils de commande sont, dans une telle hypothèse, gérées soit à l'intérieur de l'espace clos ainsi créé si le reste du circuit de commande y est également implanté, soit au travers dudit flasque si la commande est effectuée depuis l'extérieur du carter.

La solution adoptée pour la machine électrique tournante synchrone autopilotée de l'invention est différente. Elle comporte classiquement un ensemble stator/rotor logé dans un carter relié à l'arbre tournant via des paliers disposés de part et d'autre dudit ensemble, et intègre également des moyens de détection de la position rotorique placés au voisinage du rotor, ainsi qu'un flasque supportant un palier interposé entre l'ensemble stator et rotor et des moyens de détection du changement de polarisation des aimants permanents.

Parmi les avantages de cette configuration, la gestion et la mise en place des fonctions électroniques de détection et de commande devient indépendante des fonctionnalités proprement mécaniques, induisant une grande souplesse de conception et notamment des possibilités d'augmenter la compacité de l'ensemble. La latitude qui en résulte permet en effet une optimisation de l'espace et de l'encombrement dans le carter, et d'accroître la liberté du concepteur pour l'implantation des composants du système notamment de commande électronique. Il devient ainsi notamment possible de mieux gérer/profiter de l'espace disponible dans une direction axiale, sans plus se préoccuper des contraintes mécaniques liées à l'implantation ultérieure du palier. Cette configuration est également plus avantageuse pour la gestion de la connexion qui relie l'électronique de commande et les bobinages du stator.

La présente invention a pour objet une machine électrique tournante synchrone autopilotée, telle que défini dans la revendication 1.

Selon la présente invention, les moyens de détection de la position rotorique sont des moyens de détection des changements de polarisation des aimants permanents périphériques du rotor et consistent en au moins un capteur de position apte à détecter un changement de polarisation magnétique des aimants permanents périphériques du rotor au cours de la rotation du rotor.

En pratique, de préférence, au moins un capteur est placé sur une carte électronique de détection. Ce capteur est apte à détecter un changement de polarisation magnétique des aimants permanents périphériques au cours de la rotation du rotor. Ensuite, et bien que l'invention ne soit pas limitée à cette technologie, ces moyens de détection consistent de préférence en au moins un capteur à effet Hall, ce type de capteur permettant une régulation fiable et précise.

Ces capteurs devant être positionnés très près du rotor, la carte électronique de détection est orientée transversalement par rapport à l'arbre tournant, chaque capteur de ladite carte de détection étant en sus positionné, dans une direction radiale, au niveau des aimants permanents périphériques du rotor. La détection est alors efficace, permettant la mise en oeuvre d'une commutation électronique garante d'une bonne régulation.

Elle peut encore être optimisée en ce que, selon une configuration possible, les aimants permanents dépassent du corps du rotor, dans une direction axiale, au moins du côté et en direction des moyens de détection. Il n'est alors pas nécessaire d'utiliser une ou plusieurs pièces polarisées supplémentaires, mais simplement les ferrites existantes un peu allongées pour coopérer avec les capteurs. Cette caractéristique, qui contribue à rapprocher les pôles magnétiques des capteurs de part et d'autre du flasque, améliore la qualité de la détection, et par conséquent de la commutation. Elle peut aussi avoir une incidence en termes de gestion de l'espace dans le carter, puisque se crée alors un évidement creux à une extrémité axiale du rotor.

Pour en tirer parti, selon l'invention, le flasque peut comporter un moyeu central supportant le palier logé dans le volume délimité par les portions dépassantes des aimants permanents. Compte tenu de l'avancée des aimants optimisant le fonctionnement magnétique de la détection, ce volume creux existe, et la configuration de l'invention implantant le support de palier directement en sortie du rotor permet seule de réaliser ce gain d'espace avantageux.

Cette configuration associant compacité et dissociation des fonctions électriques et mécaniques n'empêche nullement un usage de l'arbre tournant du côté et éventuellement au-delà des moyens électroniques. Dans l'hypothèse d'une carte électronique de détection d'allure transversale, celle-ci peut simplement être dotée d'un orifice central pour le passage de l'arbre, pratiquement sans incidences négatives sur les connexions et raccordements électriques, hormis la diminution de la surface utile de la carte pour l'implantation des composants électroniques.

Les moyens électroniques sont en l'occurrence classiquement dissociés en un étage principalement dévolu à la détection des pôles rotoriques et un circuit de commande de la commutation qui peut lui-même être distinct d'une partie alimentation, selon la puissance requise et l'encombrement en résultant pour cette dernière. La carte électronique de détection comporte dès lors un connecteur pour la connexion à une seconde carte de commande, voire d'alimentation. Ce connecteur peut être placé centralement, c'est-à-dire sensiblement dans le prolongement de l'axe de rotation, ou être décalé radialement si l'arbre se prolonge au-delà de la carte électronique de détection.

Le connecteur peut permettre le raccordement à une électronique de commande s'étendant dans une direction axiale, également le plus centralement possible pour que la carte de commande et d'alimentation puisse bénéficier d'une dimension transversale maximale. Si l'arbre tournant entrainé par le rotor se prolonge au-delà des moyens de détection, rendant l'hypothèse de l'implantation d'une carte de commande électronique axiale moins pertinente, le connecteur peut être implanté de façon radialement décalée sur la carte de détection, et coopérer par exemple avec une seconde carte électronique disposée transversalement, parallèlement à la carte de détection.

Les bobines statoriques sont reliées à ce connecteur, et l'organisation spatiale pour le raccordement du connecteur aux différentes bobines s'effectue par conséquent au niveau de la carte de détection.

Le flasque support du palier est prévu en matériau synthétique de type plastique, qui ne constitue pas un obstacle pour le flux magnétique des aimants permanents et n'a pas ou pas significativement d'incidence sur le fonctionnement magnétique lors de la détection.

De préférence, des reliefs et évidements localisés en correspondance sur le flasque et la carte électronique de détection sont prévus pour leurs positionnement et solidarisation mutuels. Le positionnement précis de la carte comportant les capteurs relativement aux bobinages est en effet important. Ces deux éléments sont donc fixes par rapport au carter, mais non nécessairement fixés chacun audit carter. Leur positionnement mutuel est notamment important dans une perspective de guidage des fils d'alimentation des bobines, comme on le verra plus en détail dans la suite de la description.

L'invention va à présent être décrite plus en détail, en référence aux figures annexées, pour lesquelles :
- la figure 1 montre en vue perspective partielle un moteur conforme à la présente invention, coupé selon un plan médian passant par l'axe de rotation du rotor, et représenté avec une carte électronique de détection ;
- la figure 2 représente le moteur de la figure 1, selon la même vue perspective partielle, comportant une carte électronique additionnelle agencée transversalement ;
- la figure 3 illustre une version munie d'une carte électronique additionnelle agencée axialement, en vue perspective partielle coupée selon deux plans médians passant par l'axe de rotation du rotor et par conséquent amputée d'un quadrant ; et
- la figure 4 visualise une vue en élévation de face de l'ensemble constitué du flasque et de la carte électronique de détection, assemblés conformément à l'invention.

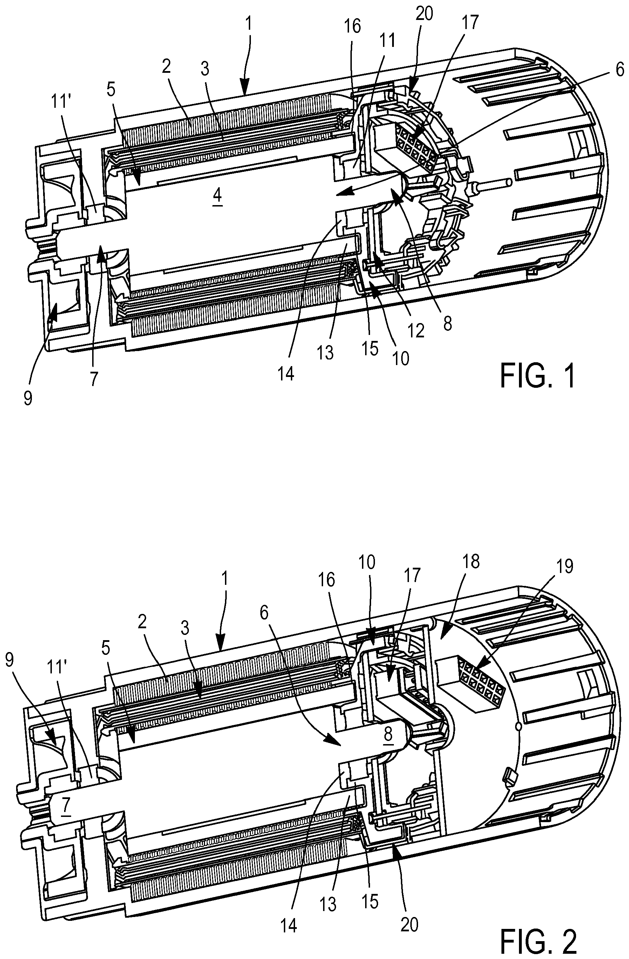

En référence à la figure 1, le carter (1) du moteur entoure un stator (2) muni de bobines (3). Le stator (2) est disposé autour d'un rotor (4) dont la périphérie est revêtue d'aimants permanents (5). Les pôles des aimants (5) adjacents sont successivement inversés. Un arbre central (6) est entraîné par le rotor (5), en l'espèce relié à l'une de ses extrémités (7) à un réducteur mécanique (9), à proximité de la première liaison du carter (1) à l'arbre (6) via un palier (11'). L'extrémité opposée (8) de l'arbre (6) passe à travers l'orifice central respectivement d'un flasque (10) supportant un autre palier (11) et d'une carte électronique (12) de détection supportée par le flasque (10). Comme indiqué auparavant, cette configuration innovante permet de confiner les fonctions mécaniques à l'intérieur, et de laisser libre accès aux fonctions électroniques à l'extérieur. L'orifice central offre cependant la possibilité d'une utilisation mécanique additionnelle de ce côté du moteur.

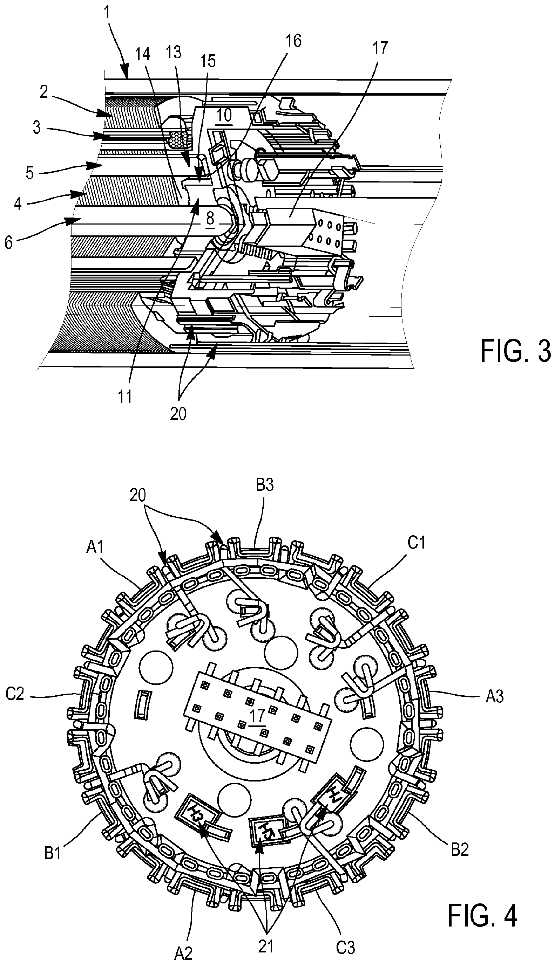

Les aimants permanents (5) recouvrant la périphérie du rotor (4) présentent une portion terminale (13) qui dépasse du corps du rotor (4) et du stator (2), délimitant avec l'arbre (6) un logement annulaire (14) dans lequel est ajusté un moyeu central (15) du flasque (10) supportant le palier (11). Cette portion terminale dépassante (13) des aimants (5) s'insère dans un logement (16) du flasque (10), permettant en pratique aux capteurs (21) (voir en figure 4) d'être positionnés au plus près desdits aimants (5). La carte électronique de détection (12), qui ne comporte que peu de composants électroniques, présente par ailleurs un connecteur (17), apte à la relier électriquement à des moyens de commande de la commutation des bobines (3) du stator (2). Elle est solidarisée et correctement positionnée au contact du flasque (10) notamment au moyen de reliefs et évidements qui se correspondent.

Dans la configuration illustrée en figure 2, ce connecteur (17) permet le raccordement à une seconde carte (18), disposée parallèlement à la carte de détection (12), et elle-même munie d'un connecteur (19). Il peut s'agir d'une carte de commande comportant les moyens de gérer le pilotage du rotor (4), mais qui n'est pas nécessairement une carte d'alimentation complète. Dans la variante de moteur représentée aux figures 1 et 2, les connecteurs (17, 19) sont décalés radialement, du fait de la présence de l'extrémité (8) de l'arbre (6), qui se prolonge en l'occurrence suffisamment pour traverser la première carte (12) de détection.

Dans la configuration de la figure 3, qui est par ailleurs semblable et souscrit à la description faite ci-dessus en référence aux figures 1 et 2, l'extrémité (8) de l'arbre (6) ne traverse pas la première carte électronique (12) de détection mais s'arrête en sortie du palier (11). Dans ce cas, le connecteur (17) est disposé centralement, et permet le raccordement d'une seconde carte électronique (18') orientée axialement, la largeur disponible transversalement, proche d'un diamètre intérieur du carter (1), étant plus favorable à l'implantation d'une carte axiale que dans les configurations précédentes.

L'ensemble flasque (10) / carte de détection (12) apparaît également en figure 4, en vue de face qui montre que la forme extérieure du flasque (10), crénelée en une succession de gorges périphériques axiales (20), sert également à guider les fils d'alimentation des bobines (3) depuis la carte de détection (12) située d'un côté dudit flasque (10), en fait depuis le connecteur (17), vers les bobines (3) localisées de l'autre côté du flasque (10), dans le stator (2). Le guidage est réalisé, dans le flasque (10), de manière à la fois axiale et périphérique, pour pouvoir accéder à trois bobines statoriques triples (A, B, C) décalées de 40°, les trois bobinages de chaque bobine triple étant eux-mêmes décalés de 120°. Ainsi, en référence à la figure 4, les trois phases d'alimentation des bobines (A, B, C), chacune commandée par un capteur à effet Hall (21) (par conséquent également décalés de 40°) alimentent en réalité successivement les trois bobinages (A1, A2, A3), puis (B1, B2, B3) et enfin (C1, C2, C3) des trois bobines A, B, C. Les trois bobines triples (A, B, C) sont reliées au connecteur (17), qui ne comprend dès lors que trois point de connexion pour l'alimentation, correspondant à l'alimentation triphasée nécessaire à la création du champ magnétique statorique tournant du moteur.

Dans le connecteur (17), cinq points de connexion sont occupés respectivement par les trois capteurs (21) et par le + et le - nécessaires à leur polarisation. Il y a donc au moins cinq connexions dévolues aux signaux de détection, et trois à la commande de l'alimentation des bobines (3).

L'invention ne se limite bien entendu pas aux exemples décrits et expliqués en référence aux figures, mais elle englobe les variantes et versions qui entrent dans la portée des revendications.

## Revendications

1. Machine électrique tournante synchrone autopilotée comportant un stator (2) et un rotor (4) muni d'aimants permanents (5) périphériques du rotor (4), l'ensemble stator (2) et rotor (4) étant logé dans un carter (1) relié à un arbre tournant (6) entraîné par le rotor (4) via des paliers (11, 11') disposés de part et d'autre dudit ensemble, des moyens de détection (21) de la position rotorique en vue de la commande de l'alimentation des bobines (3) statoriques étant placés au voisinage du rotor (4), un flasque (10) supportant directement en sortie du rotor (4) un palier (11) et étant interposé entre l'ensemble stator (2) et rotor (4) et des moyens de détection (21) de la position rotorique, **caractérisée en ce que** les moyens de détection (21) de la position rotorique sont des moyens de détection (21) des changements de polarisation des aimants permanents (5) périphériques du rotor (4) et consistent en au moins un capteur (21) de position apte à détecter un changement de polarisation magnétique des aimants permanents (5) périphériques du rotor (4) au cours de la rotation du rotor (4).

2. Machine électrique tournante synchrone autopilotée selon la revendication précédente, **caractérisée en ce qu'**au moins un capteur (21) de position est placé sur une carte électronique (12) de détection.

3. Machine électrique tournante synchrone autopilotée selon l'une des revendications précédentes, **caractérisée en ce que** chaque capteur (21) de position est un capteur à effet Hall.

4. Machine électrique tournante synchrone autopilotée selon l'une des revendications précédentes, **caractérisée en ce que** la carte électronique (12) de détection est orientée transversalement par rapport à l'arbre tournant (6), chaque capteur (21) de ladite carte électronique (12) de détection étant positionné, dans une direction radiale, au niveau des aimants permanents (5).

5. Machine électrique tournante synchrone autopilotée selon l'une des revendications précédentes, **caractérisée en ce que** les aimants permanents (5) dépassent du corps du rotor (4), dans une direction axiale, au moins du côté et en direction des moyens de détection (21) de la position rotorique.

6. Machine électrique tournante synchrone autopilotée selon la revendication précédente, **caractérisée en ce que** le flasque (10) comporte un moyeu central (15) supportant le palier (11), ledit moyeu (15) étant logé dans un volume (14) délimité par les portions dépassantes (13) des aimants permanents (5).

7. Machine électrique tournante synchrone autopilotée selon l'une des revendications 2 à 6, **caractérisée en ce que** la carte électronique (12) de détection présente un orifice central pour le passage de l'arbre (6).

8. Machine électrique tournante synchrone autopilotée selon l'une des revendications 2 à 7, **caractérisée en ce que** la carte électronique (12) de détection comporte un connecteur (17) pour la connexion à une seconde carte de commande (18, 18') voire d'alimentation.

9. Machine électrique tournante synchrone autopilotée selon la revendication précédente, **caractérisée en ce que** les bobines statoriques (3) sont reliées audit connecteur (17) pour la connexion à une seconde carte de commande (18,18').

10. Machine électrique tournante synchrone autopilotée selon l'une des revendications précédentes, **caractérisée en ce que** le flasque (10) est en matériau synthétique de type plastique.

11. Machine électrique tournante synchrone autopilotée selon l'une des revendications précédentes, **caractérisée en ce que** des reliefs et évidements localisés en correspondance sur le flasque (10) et la carte électronique (12) de détection sont prévus pour leurs positionnement et solidarisation mutuels.

## Patentansprüche

1. Selbstgesteuerte, rotierende elektrische Synchronmaschine, die einen Stator (2) und einen Rotor (4) aufweist, der mit Permanentmagneten (5) an einem Umfang des Rotors (4) versehen ist, wobei die Einheit aus Stator (2) und Rotor (4) in einem Gehäuse (1) untergebracht ist, das mit einer rotierenden Welle (6) verknüpft ist, die durch den Rotor (4) über Lager (11, 11') angetrieben wird, die auf beiden Seiten der Einheit angeordnet sind, wobei Mittel (21) zum Erfassen der Rotorposition im Hinblick auf die Steuerung der Versorgung der Statorspulen (3) in der Nähe des Rotors (4) platziert sind, wobei ein Flansch (10) direkt an einem Ausgang des Rotors (4) ein Lager (11) trägt und zwischen der Einheit aus Stator (2) und Rotor (4) und den Mitteln (21) zum Erfassen der Rotorposition angeordnet ist, **dadurch gekennzeichnet, dass** die Mittel (21) zum Erfassen der Rotorposition Mittel (21) zum Erfassen von Polarisationsänderungen der Permanentmagnete (5) an dem Umfang des Rotors (4) sind und aus mindestens einem Positionssensor (21) bestehen, der geeignet ist, eine Änderung der magnetischen Polarisation der Permanentmagnete (5) an dem Umfang des Rotors (4) während der Drehung des Rotors (4) zu erfassen.

2. Selbstgesteuerte, rotierende elektrische Synchronmaschine nach dem vorstehenden Anspruch, **dadurch gekennzeichnet, dass** mindestens ein Positionssensor (21) auf einer elektronischen Erfassungsplatine (12) platziert ist.

3. Selbstgesteuerte, rotierende elektrische Synchronmaschine nach einem der vorstehenden Ansprüche, **dadurch gekennzeichnet, dass** jeder Positionssensor (21) ein Hall-Effekt-Sensor ist.

4. Selbstgesteuerte, rotierende elektrische Synchronmaschine nach einem der vorstehenden Ansprüche, **dadurch gekennzeichnet, dass** die elektronische Erfassungsplatine (12) relativ zu der rotierenden Welle (6) quer ausgerichtet ist, wobei jeder Sensor (21) der elektronischen Erfassungsplatine (12) in einer radialen Richtung auf der Höhe der Permanentmagnete (5) positioniert ist.

5. Selbstgesteuerte, rotierende elektrische Synchronmaschine nach einem der vorstehenden Ansprüche, **dadurch gekennzeichnet, dass** die Permanentmagnete (5) in einer axialen Richtung über den Körper des Rotors (4) hinausragen, mindestens auf der Seite und in Richtung der Mittel (21) zum Erfassen der Rotorposition.

6. Selbstgesteuerte, rotierende elektrische Synchronmaschine nach dem vorstehenden Anspruch, **dadurch gekennzeichnet, dass** der Flansch (10) eine zentrale Nabe (15) aufweist, die das Lager (11) trägt, wobei die Nabe (15) in einem Volumen (14) untergebracht ist, das durch die hinausragenden Abschnitte (13) der Permanentmagneten (5) begrenzt wird.

7. Selbstgesteuerte, rotierende elektrische Synchronmaschine nach einem der Ansprüche 2 bis 6, **dadurch gekennzeichnet, dass** die elektronische Erfassungsplatine (12) eine zentrale Öffnung für den Durchgang der Welle (6) vorweist.

8. Selbstgesteuerte, rotierende elektrische Synchronmaschine nach einem der Ansprüche 2 bis 7, **dadurch gekennzeichnet, dass** die elektronische Erfassungsplatine (12) einen Verbinder (17) für die Verbindung mit einer zweiten Steuer- (18, 18') oder sogar Versorgungsplatine aufweist.

9. Selbstgesteuerte, rotierende elektrische Synchronmaschine nach dem vorstehenden Anspruch, **dadurch gekennzeichnet, dass** die Statorspulen (3) mit dem Verbinder (17) für die Verbindung mit einer zweiten Steuerplatine (18, 18') verknüpft sind.

10. Selbstgesteuerte, rotierende elektrische Synchronmaschine nach einem der vorstehenden Ansprüche, **dadurch gekennzeichnet, dass** der Flansch (10) aus einem synthetischen Material von einem Typ Kunststoff besteht.

11. Selbstgesteuerte, rotierende elektrische Synchronmaschine nach einem der vorstehenden Ansprüche, **dadurch gekennzeichnet, dass** entsprechend lokalisierte Erhebungen und Aussparungen auf dem Flansch (10) und der elektronischen Erfassungsplatine (12) für ihre gegenseitige Positionierung und festen Verbindung vorgesehen sind.

## Claims

1. Self-driven synchronous rotary electrical machine comprising a stator (2) and a rotor (4) provided with peripheral permanent magnets (5) of the rotor (4), the stator (2) and rotor (4) assembly being housed in a casing (1) connected to a rotating shaft (6) driven by the rotor (4) via bearings (11, 11') arranged on either side of said assembly, means (21) for detecting the rotor position with a view to controlling the supply of the stator coils (3) being placed in the vicinity of the rotor (4), a flange (10) supporting a bearing (11) directly at the output of the rotor (4) and being inserted between the stator (2) and rotor (4) assembly and means (21) for detecting the rotor position, **characterized in that** the rotor position detection means (21) are means (21) for detecting the changes in the polarization of the peripheral permanent magnets (5) of the rotor (4) and consisting of at least one position sensor (21) capable of detecting a change in the magnetic polarization of the peripheral permanent magnets (5) of the rotor (4) during the rotation of the rotor (4).

2. Self-driven synchronous rotary electrical machine according to the preceding claim, **characterized in that** at least one position sensor (21) is placed on an electronic detection board (12).

3. Self-driven synchronous rotary electrical machine according to either of the preceding claims, **characterized in that** each position sensor (21) is a Hall effect sensor.

4. Self-driven synchronous rotary electrical machine according to any of the preceding claims, **characterized in that** the electronic detection board (12) is oriented transversely relative to the rotating shaft (6), each sensor (21) of said electronic detection board (12) being positioned, in a radial direction, at the permanent magnets (5).

5. Self-driven synchronous rotary electrical machine according to any of the preceding claims, **characterized in that** the permanent magnets (5) project from the rotor body (4), in an axial direction, at least on the side and in the direction of the rotor position detection means (21).

6. Self-driven synchronous rotary electrical machine according to the preceding claim, **characterized in that** the flange (10) comprises a central hub (15) which supports the bearing (11), said hub (15) being housed in a volume (14) delimited by the projecting portions (13) of the permanent magnets (5).

7. Self-driven synchronous rotary electrical machine according to any of claims 2 to 6, **characterized in that** the electronic detection board (12) has a central opening for the passage of the shaft (6).

8. Self-driven synchronous rotary electrical machine according to any of claims 2 to 7, **characterized in that** the electronic detection board (12) comprises a connector (17) for connection to a second control board (18, 18') or even power-supply board.

9. Self-driven synchronous rotary electrical machine according to the preceding claim, **characterized in that** the stator coils (3) are connected to said connector (17) for connection to a second control board (18, 18').

10. Self-driven synchronous rotary electrical machine according to any of the preceding claims, **characterized in that** the flange (10) is made of plastics synthetic material.

11. Self-driven synchronous rotary electrical machine according to any of the preceding claims, **characterized in that** reliefs and recesses located in correspondence on the flange (10) and the electronic detection board (12) are provided for their mutual positioning and securing.
